# EUROPEAN PATENT APPLICATION

(11) **EP 2 849 131 A2**
(43) Date of publication of application: **18.03.2015**
(21) Application number: 14180099.5
(22) Date of filing: 06.08.2014
(51) Int. Cl.: G06Q 10/04, F03D 7/02, F03D 11/00, H02J 3/38

(54) **Method and system for estimating optimal generation quantity of wind turbine in wind farm**

(30) Priority: 09.08.2013 KR 20130094488
(71) Applicant: Korea Electronics Technology Institute, Gyeonggi-do 463-816 (KR)
(72) Inventor: HAM, Kyung Sun, Gyeonggi-do 446-912 (KR); JUNG, Hye Dong, Gangnam-gu, Seoul 135-506 (KR)
(74) Representative: Fiesser, Gerold Michael

(57) **Abstract**

A method and system for estimating an optimal power generation quantity of a turbine in a wind farm is provided. The method for estimating a demanded generation quantity allocates a demanded generation quantity to each wind turbine provided in the wind farm based on a wind condition to enter the wind farm. Accordingly, an operation cost of the wind farm can be minimized and also can be reduced by minimizing abrasion of wind turbines, while the total generation quantity is produced as demanded.

## Description

### TECHNICAL FIELD OF THE INVENTION

The present invention relates generally to a method and system for estimating a power generation quantity, and more particularly, to a method and system for estimating optimal power generation quantities of wind turbines provided in a wind farm.

### BACKGROUND OF THE INVENTION

Wind farms are places where many wind power generators for producing energy by turning generators by winds on the land or sea are installed. The wind farms have been widely studied/commercialized all over the world including Germany, U.S., Denmark, and other countries, and small-scale wind farms have been established in Korea.

The wind farm should generate and provide power demanded by a system operator, and should be run to meet the system-related standards. In addition, it is important to maximize energy production within a range allowed by the system operator.

Furthermore, it is necessary to minimize an energy production cost by minimizing a mechanical load of power generation equipments and reduce a maintenance/repair cost.

### SUMMARY OF THE INVENTION

To address the above-discussed deficiencies of the prior art, it is a primary aspect of the present invention to provide a method and system for estimating a demanded generation quantity, which can allocate an optimal power generation quantity by predicting a wind condition and a load of each wind turbine provided in a wind farm.

According to one aspect of the present invention, a method for estimating a demanded generation quantity includes: measuring a wind condition of a wind to enter a wind farm; and allocating a demanded generation quantity to each wind turbine provided in the wind farm based on the measured wind condition.

The allocating may be performed before the wind enters the wind turbines.

The allocating may include: predicting a wind condition of each of the wind turbines based on the measured wind condition, and allocating the demanded generation quantity to each of the wind turbines based on the predicted wind condition.

The allocating may include allocating the demanded generation quantity to each of the wind turbines by considering the predicted wind condition for each of the wind turbines and a mechanical load which is to be applied to each of the wind turbines in producing the demanded generation quantity.

In addition, the allocating may include determining the demanded generation quantity for each of the wind turbines so that a sum of the mechanical loads applied to the wind turbines in producing the demanded generation quantities is minimized.

In addition, the method may further include controlling each of the wind turbines to produce the allocated demanded generation quantity.

According to another aspect of the present invention, a system for controlling a wind farm includes: a communication unit configured to receive a wind condition of a wind to enter the wind farm; and a processor configured to allocate a demanded generation quantity to each wind turbine provided in the wind farm based on the wind condition transmitted via the communication unit.

According to exemplary embodiments of the present invention as described above, demanded generation quantities can be optimally allocated to wind turbines in a wind farm by predicting a wind condition and a load of each of the wind turbines. Accordingly, an operation cost of the wind farm can be minimized and also can be reduced by minimizing abrasion of wind turbines, while the total generation quantity is produced as demanded.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a view illustrating a wind farm to which the present invention is applicable;
FIG. 2 is a view to illustrate a process of predicting a wind condition;
FIG. 3 is a view illustrating a method for allocating a demanded generation quantity;
FIG. 4 is a view to illustrate an overall process of predicting a wind condition and allocating a demanded generation quantity; and
FIG. 5 is a detailed block diagram of a prediction control system shown in FIG. 1.

### DETAILED DESCRIPTION OF THE INVENTION

Reference will now be made in detail to the embodiment of the present general inventive concept, examples of which are illustrated in the accompanying drawings, wherein like reference numerals refer to the like elements throughout. The embodiment is described below in order to explain the present general inventive concept by referring to the drawings.

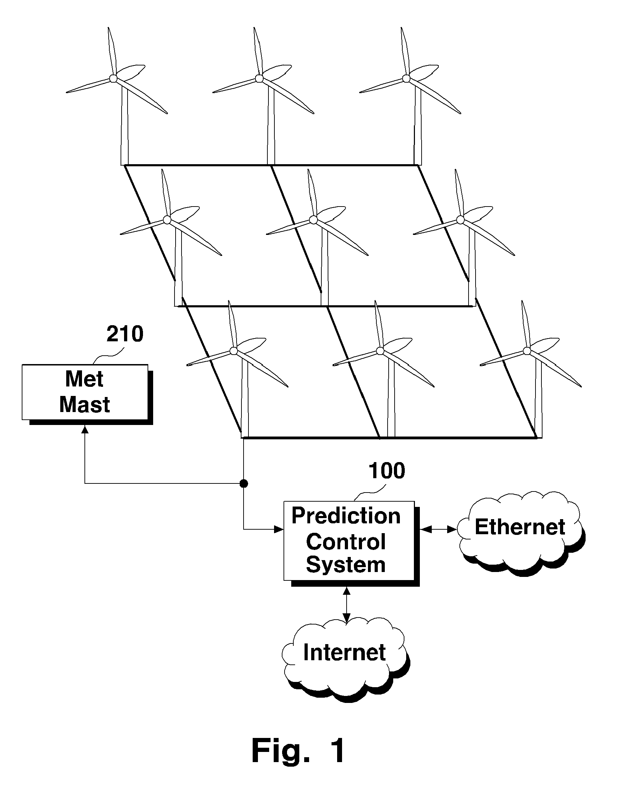

FIG. 1 is a view illustrating a wind farm to which the present invention is applicable. In FIG. 1, it is assumed that the wind farm is an offshore wind farm. However, the present invention is applicable to an onshore wind farm.

In the wind farm to which the present invention is applicable, a 'wind farm prediction control system 100' (hereinafter, referred to as a 'prediction control system 100') controls wind turbines provided in the wind farm.

Specifically, the prediction control system 100 makes an ultra-short term prediction regarding a wind condition of a wind to enter each wind turbine on a real time basis, and allocates a demanded generation quantity to the wind turbine based on the result of the prediction. Accordingly, the wind turbine is controlled to produce the demanded generation quantity allocated thereto.

The wind condition may include a wind speed and a wind direction, and may further include other elements regarding winds.

The process of allocating the demanded generation quantity is a process in which a system operator distributes a total generation quantity demanded of the wind farm to the wind turbines. For example, when the total generation quantity demanded of the wind farm is 100kW, the wind turbine-1 may be allocated 40kW, the wind turbine-2 may be allocated 30kW, the wind turbine-3 may be allocated 20kW, and the wind turbine-4 may be allocated 10kW.

The predicting the wind condition and the allocating and controlling the generation quantity should start after a met mast 210 measures a wind condition and should be completed before the wind arrives at the wind turbine located at the head of the wind farm. Since these operations require high speed computing, it is preferable to design hardware and software to be processed in parallel.

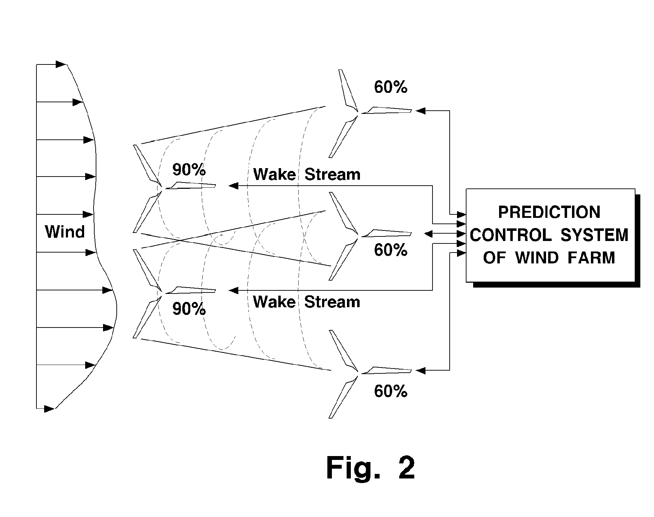

FIG. 2 is a view illustrating a process of predicting a wind condition. In order to predict wind conditions of winds to arrive at wind turbines provided in the wind farm, the prediction control system 100 models a wind field of the wind farm as show in FIG. 2.

In modeling the wind field, the prediction control system 100 makes an ultra-short-term prediction regarding a wind condition of a wind to arrive at each wind turbine on a real time basis by considering a wake effect caused by the wind turbine based on the wind condition measured by the met mast 210.

Since the wind field of the wind farm is influenced by the wake effect, a wind speed or air volume of winds arriving at rear wind turbines may be modeled to be smaller than a wind speed or air volume of winds arriving at front wind turbines as shown in FIG. 2.

In addition, to reflect the wake effect, the locations of wind turbines (ultimately, intervals between wind turbines) and the orientations of wind turbines (ultimately, angles between wind turbines) are considered in modeling the wind field.

When the wind condition of each wind turbine is predicted, the prediction control system 100 allocates a demanded generation quantity to each wind turbine based on the predicted wind condition.

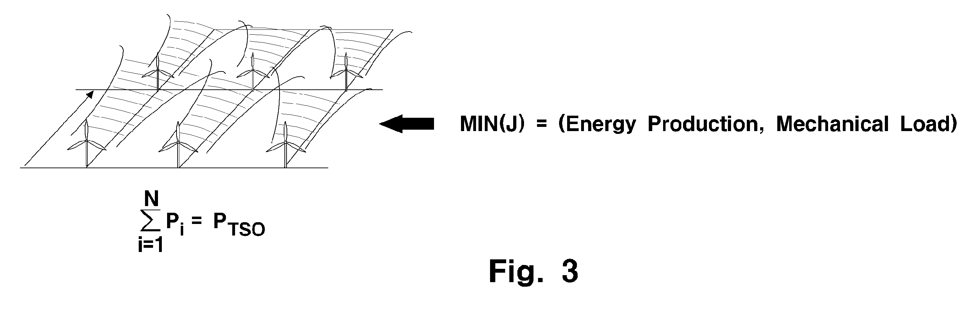

A method for allocating a demanded generation quantity is illustrated in FIG. 3. In FIG. 3, Pᵢ is a demanded generation quantity allocated to each wind turbine, and P_{TSO} is a sum of the demanded generation quantities, that is, a total generation quantity demanded of the wind farm.

The demanded generation quantity may be allocated to each wind turbine so that a sum of mechanical loads to be applied to the wind turbines can be minimized. The mechanical load to be applied to the wind turbine may be calculated based on the wind condition of the wind to enter the wind turbine and the demanded generation quantity.

Accordingly, when the total generation quantity is to be produced by the wind turbines, the demanded generation quantities of the wind turbines may be determined so that the sum of the mechanical loads of the wind turbines can be minimized.

For example, when the wind turbines-1, 2, 3, 4 produce 40kW, 30kW, 20kW, and 10kW, respectively, the total mechanical load may be 100kJ, and, when the wind turbines produce 30kW, 30kW, 20kW, and 20kW, the total mechanical load may be 90kJ. In this case, the demanded generation quantities of the wind turbines are determined as 30kW, 30kW, 20kW, 20kW.

In addition, when the wind turbines-1, 2, 3, 4 produce 30kW, 20kW, 30kW, 20kW, respectively, the total mechanical load may be 85kJ. In this case, the demanded generation quantity of the wind turbines may be changed to 30kW, 20kW, 30kW, 20kW.

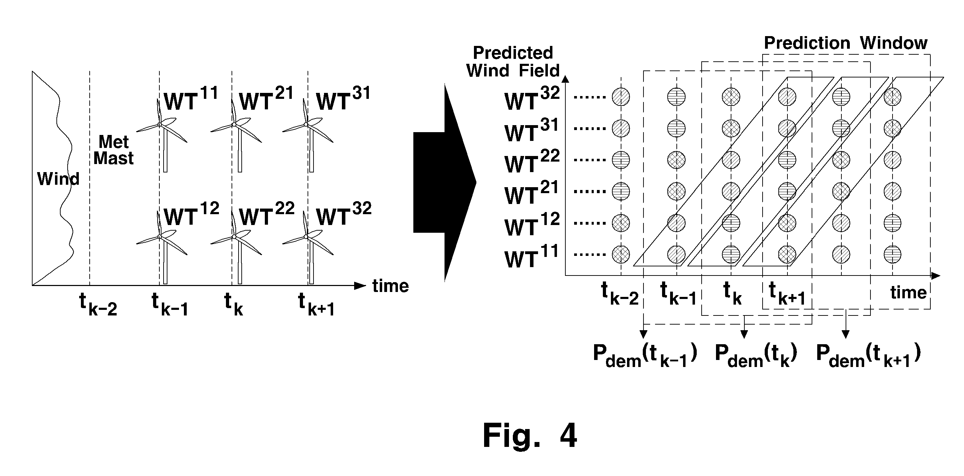

FIG. 4 is a view to illustrate an overall process of predicting a wind condition and allocating a demanded generation quantity. In FIG. 4, a concept of a prediction window is introduced.

The prediction window refers to a section from an area where the wind the condition of which is measured by the met mast 210 enters the wind farm to an area where the wind passing through the wind farm escapes from the wind farm. The prediction window includes winds measured previously in addition to the wind currently measured by the met mast 210. This is to estimate demanded generation quantities and predict mechanical loads for all of the wind turbines provided in the wind farm.

The prediction control system 100 may predict the wind condition and the mechanical loads regarding all of the wind turbines provided in the wind farm at a real time/in an ultra-short term through the prediction window, and may allocate demanded generation quantities to the wind turbines based on the result of the prediction.

Referring to FIG. 4, 1) the wind entering the wind turbines (WTs) -11, 12 at tₖ is the wind entering the met mast 20 before tₖ, 2) the wind entering the WTs-21, 22 at tₖ is the wind entering the met mast 210 before tₖ₋₁ and then entering the WTs-11, 12 at tₖ₋₁, and 3) the wind entering the WTs-31, 32 at tₖ is the wind entering the met mast 210 before tₖ₋₂, entering the WTs-11, 12 at tₖ₋₂, and then entering WTs-21, 22 at tₖ₋₁.

That is, winds to be applied to the wind turbines when the prediction control system 100 allocates the demanded generation quantities to the wind turbines entered the met mast 210 at different times.

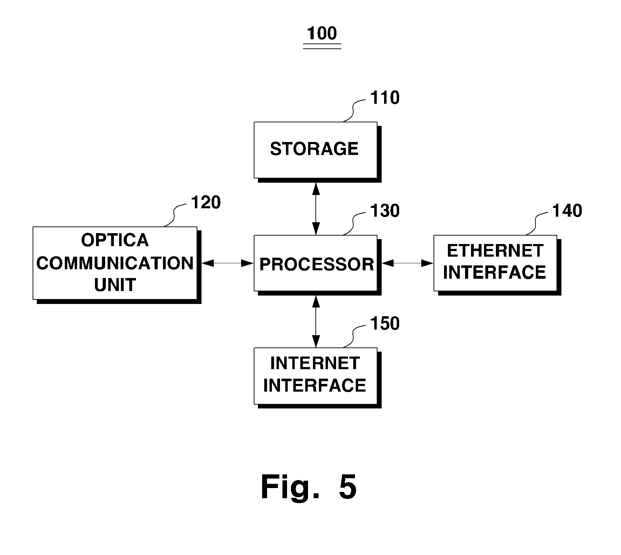

FIG. 5 is a detailed block diagram illustrating the prediction control system 100 of FIG. 1. As shown in FIG. 5, the prediction control system 100 includes a storage 110, an optical communication unit 120, a processor 130, an Ethernet interface 140, and an Internet interface 150.

The storage 110 stores programs and data for predicting the wind condition and allocating and controlling the demanded generation quantity as described above, and the processor 130 models the wind field and allocates and controls the demanded generation quantity based on the result of the prediction of the wind condition by using the programs and the data stored in the storage 10.

The optical communication unit 120 may communicate with the met mast 210 and the wind turbines provided in the wind farm, and may collect the wind condition information measured by the met mast 210 and control the wind turbines.

The Ethernet interface 140 is an interface for accessing a Local Area Network (LAN) in the wind farm and communicating with other terminals, and the Internet interface 150 is an interface for communicating with other terminals located outside the wind farm through the Internet.

The processor 130 may model the wind field, allocate the demanded generation quantity, and control the wind turbines in parallel. Specifically, the most HW/SW resources are allocated to the modeling of the wind field at an early stage, are allocated to the allocating of the demanded generation quantity at a middle stage, and are allocated to the controlling of the wind turbines at a late stage.

For example, when the wind field modeling, the allocating, and the controlling are performed every 90 seconds, 1) 100% of the HW/SW resources may be allocated to the modeling of the wind field from 0 to 30 seconds, 2) 80% of the HW/SW resources may be allocated to the modeling of the wind field and 20% may be allocated to the allocating of the demanded generation quantity from 30 to 40 seconds, 3) 100% of the HW/SW resources may be allocated to the allocating of the demanded generation quantity from 40 to 60 seconds, 4) 80% of HW/SW resources may be allocated to the allocating of the demanded generation quantity and 20% may be allocated to the controlling of the turbine (located at the head of the wind farm) from 60 to 70 seconds, and 5) 100% of the HW/SW resources may be allocated to the controlling of the turbine (located in the middle and rear of the wind farm) from 70 to 90 seconds.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for estimating a demanded generation quantity, the method comprising:
measuring a wind condition of a wind to enter a wind farm; and
allocating a demanded generation quantity to each wind turbine provided in the wind farm based on the measured wind condition.

2. The method of claim 1, wherein the allocating is performed before the wind enters the wind turbines.

3. The method of claim 1, wherein the allocating comprises: predicting a wind condition of each of the wind turbines based on the measured wind condition, and allocating the demanded generation quantity to each of the wind turbines based on the predicted wind condition.

4. The method of claim 3, wherein the allocating comprises allocating the demanded generation quantity to each of the wind turbines by considering the predicted wind condition for each of the wind turbines and a mechanical load which is to be applied to each of the wind turbines in producing the demanded generation quantity.

5. The method of claim 4, wherein the allocating comprises determining the demanded generation quantity for each of the wind turbines so that a sum of the mechanical loads applied to the wind turbines in producing the demanded generation quantities is minimized.

6. The method of claim 1, further comprising controlling each of the wind turbines to produce the allocated demanded generation quantity.

7. A system for controlling a wind farm, the system comprising:
a communication unit configured to receive a wind condition of a wind to enter the wind farm; and
a processor configured to allocate a demanded generation quantity to each wind turbine provided in the wind farm based on the wind condition transmitted via the communication unit.
